Europäisches Patentamt

**European Patent Office**

**Office européen des brevets**

(19)

(11) Publication number: **0 023 142 B1**

(12) # EUROPEAN PATENT SPECIFICATION

(45) Date of publication of patent specification: **25.01.84**

(51) Int. Cl.³: **A 01 B 69/04, A 01 B 45/04**

(21) Application number: **80302438.9**

(22) Date of filing: **18.07.80**

(54) **Sod processing machine and shoe.**

(30) Priority: **20.07.79 CA 332285**

(43) Date of publication of application:
**28.01.81 Bulletin 81/4**

(45) Publication of the grant of the patent:
**25.01.84 Bulletin 84/4**

(84) Designated Contracting States:
**BE DE FR GB NL SE**

(73) Proprietor: **BROUWER TURF EQUIPMENT LIMITED
Woodbine Avenue
Keswick Ontario L4P 3C8 (CA)**

(72) Inventor: **Arnold, William
R. R. 1 Sutton West
Ontario, L0E 1RO (CA)**

(74) Representative: **Ellis, John Clifford Holgate et al,
MEWBURN ELLIS & CO. 2/3 Cursitor Street
London EC4A 1BQ (GB)**

(56) References cited:
**DE - A - 1 557 706
GB - A - 854 827
US - A - 1 444 738
US - A - 1 567 853
US - A - 1 731 220
US - A - 1 939 472
US - A - 3 395 771
US - A - 3 402 784
US - A - 3 509 944
US - A - 3 537 531
US - A - 4 161 143**

Courier Press, Leamington Spa, England.

## Sod processing machine and shoe

This invention relates to an automatic steering mechanism for a sod processing machine, and to a shoe for use in an automatic steering mechanism.

Sod is commonly harvested by sod harvesters which include an undercutting blade for undercutting a strip of sod, sidecutting blades for cutting the edges of the strip of sod, and a conveyor located behind the blades for conveying the cut sod upwardly to a location where it is processed for shipment. In operation the driver of a sod harvester attempts to steer the vehicle so that the edge of the undercutting blade is in exact alignment at all times with the cut edge of the sod lying in the ground. If the path of the harvester varies with such alignment, either the strip of sod being cut will become too narrow, which makes the sod unfit for sale to customers as standard sod, or else the operator will leave a thin strip of sod remaining in the ground between cut strips. Since operators prefer to err on the side of ensuring that the cut strip of sod is of proper width, it is common to leave strips of sod in the ground of from one to three inches in width. When the total width of the sod strip is only 18 inches, as is common, the strip of sod left in the ground amounts to a substantial percentage of the total amount of sod cut. In addition when the field is being tilled after harvesting, to plant fresh grass seed, the strips of sod remaining in the ground create difficulty in cultivating the field.

It is therefore an object of the present invention to provide an automatic steering mechanism for a sod harvester, so that the harvester will follow the edge of the cut sod in the ground automatically, without depending on the constant skill and attention of the operator. It is a further object of the invention to provide a shoe for following the edge of the cut sod, the shoe being designed so that there is little tendency for the shoe to jump over the cut edge of the sod (which would result in loss of automatic steering for the harvester).

It is known to provide tractors with a guide which travels in a furrow formed by a plough on the tractor in order to steer the tractor. Such guides are shown, for example, in US—A—1 444 738, US—A—1 567 853 and US—A—1 731 220. None of these devices are suitable for use with sod harvesting apparatus.

In one of its aspects the invention provides a shoe for sod harvesting apparatus having an automatic steering mechanism for guiding said apparatus along a path of travel parallel to a cut edge of sod in the ground, said automatic steering mechanism including a support arm having a rear end mounted on said apparatus and a forward end; said shoe being adapted to be mounted on the forward end of said support arm and being adapted to slide along the ground against the cut edge of sod and to follow the edge for guiding the apparatus, and comprising:

(a) a trailing end,

(b) an elongated edge rod of substantially circular cross-section adapted to slide along and protrude into said cut edge,

(c) a front rod joined to the edge rod and extending forwardly and outwardly from the edge rod, away from said cut edge to a location spaced outwardly of the edge rod,

(d) front ramp means extending forwardly from said location so that the shoe will rise over obstacles in its path of travel, said front ramp means being spaced outwardly from said cut edge, and

(e) joint means mounted on said shoe at a location between the front ramp means and the trailing end so that the shoe extends substantially both forwardly and rearwardly of the joint means, said joint means being adapted to connect the shoe to the forward end of said support arm and said joint means permitting pitching and yawing movement of the shoe relative to the support arm. Preferably the shoe incorporates at least one further rod spaced laterally from the elongated edge rod and adapted to slide over the ground and act as a support runner.

In another aspect the invention provides sod harvesting apparatus having steering wheels for steering said apparatus, a steering mechanism for steering said wheels, hydraulic power means for driving the steering mechanism, a hydraulic steering circuit connected to the hydraulic power means for operating the hydraulic power means, an automatic steering mechanism for guiding said apparatus along a path of travel parallel to a cut edge of sod in the ground, said automatic steering mechanism including

(a) a support arm having a rear end mounted on the apparatus,

(b) a shoe according to the invention mounted on the forward end of the support arm through the joint means referred to in (e) above,

(c) spring means acting on the rear end of the support arm to bias the support arm towards the cut edge of sod,

(d) sensing and actuating means connected to the support arm for sensing side to side movement of said arm as the shoe follows said cut edge and for producing an actuating signal in response to said side to side movement,

(e) valve means in said hydraulic steering circuit for controlling flow to the hydraulic power means,

(f) said valve means being connected to said sensing means and actuating means and being responsive to said actuating signal for operating the power means to steer the steering wheels for the apparatus to follow the path of the shoe,

(g) and feedback means connected to said wheels and coupled to one of said sensing and actuating means and said valve means and responsive to the steering of said wheels in the direction caused by the steering signal to change the condition of said one of said sensing and actuating means and said valve means in a direction to reduce the effect of said actuating signal on said valve means.

Further objects and advantages of the invention will appear from the following description, taken together with the accompanying drawings, in which:

Fig. 1 is a front perspective view of a sod harvester equipped with an automatic steering mechanism according to the invention;

Fig. 2 is a perspective view of a shoe and mounting mechanism for the harvester of Fig. 1;

Fig. 3 is a perspective view of the shoe of Figs. 1 and 2, taken from the outside of the shoe;

Fig. 4 is a sectional view along lines 4—4 of Fig. 2;

Fig. 4a is a sectional view of a modified rod of the shoe previously shown;

Fig. 5 is a sectional view along lines 5—5 of Fig. 2;

Fig. 6 is a sectional view along lines 6—6 of Fig. 5;

Fig. 7 is a top view of the harvester of Fig. 1;

Fig. 8 is a schematic view of a hydraulic-electric circuit for the automatic steering mechanism of the preceding drawings;

Fig. 9 is a top view of a modified shoe according to the invention;

Fig. 10 is a perspective view of the shoe of Fig. 9;

Fig. 11 is a perspective view of a portion of a modified shoe mounting and sensing system according to the invention;

Fig. 12 is a top view of the arrangement of Fig. 11;

Fig. 13 is a perspective view showing a valve shuttle bracket of Figs. 11 and 12;

Fig. 14 is a cross sectional view of a modified shoe of the invention; and

Fig. 15 is a perspective view of the shoe of Fig. 14.

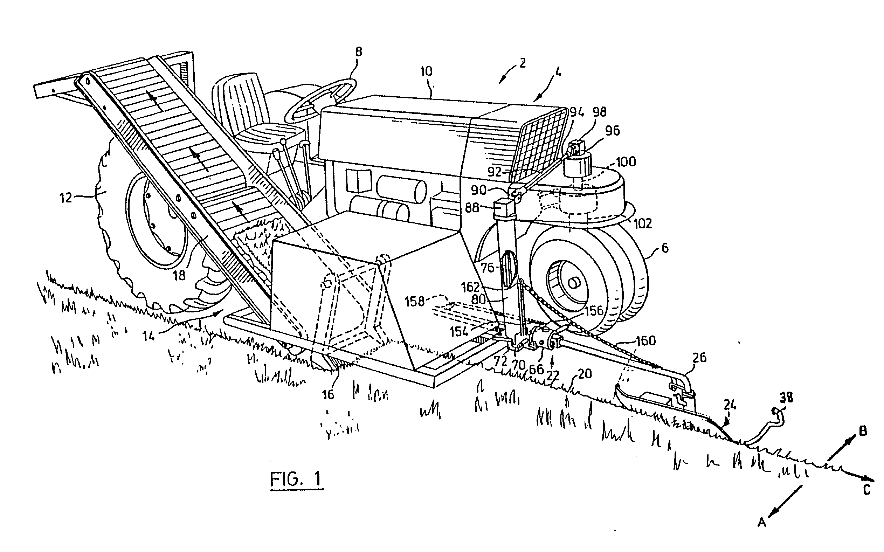

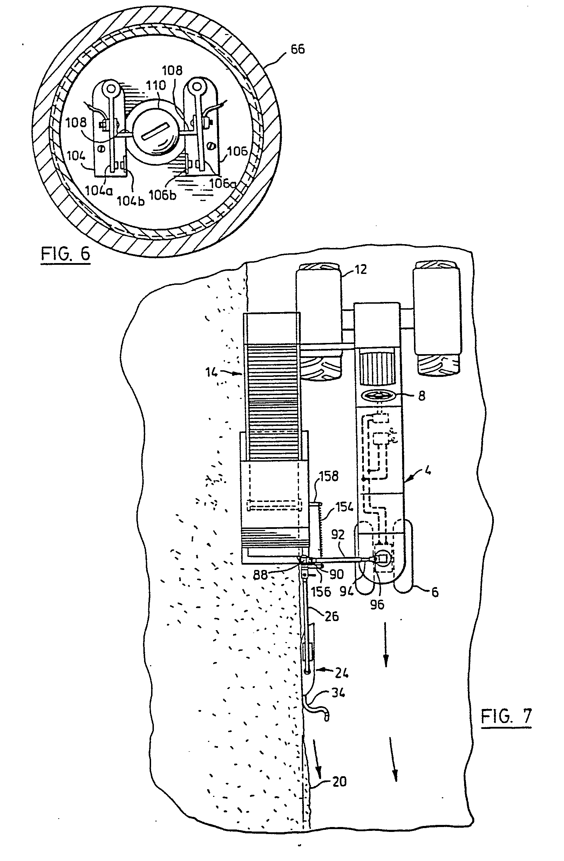

Reference is first made to Figs. 1 and 7 which show a typical sod harvester 2 with which the invention may be employed. The harvester 2, which is conventional and which is shown diagrammatically, may be of the kind illustrated in issued U.S. patent No. 3,509,944. The harvester 2 includes a tractor 4 having front steered wheels 6 controlled by a steering wheel 8, a body 10, and rear wheels 12. Connected to the side of the tractor is a sod cutter 14 having undercutting and sidecutting blades generally indicated at 16, and a conveyor system 18 to convey cut sod upwardly for processing. The sod cutter blades 16 may be of the kind shown in U.S. patent 3,509,944. The harvester 2 will normally include mechanism for rolling or slabbing the sod, and may also include mechanism for stacking the sod onto pallets; such mechanism is not shown since it is conventional and does not form part of this invention.

In operation the sod harvester 2 will normally travel along a path of travel which follows the cut edge 20 of sod which lies in the ground. In this description the term "inwardly" will be used to describe a horizontal direction into the sod lying in the ground, as indicated by arrow A. The term "outwardly" will be used to describe a horizontal direction away from the sod remaining to be cut, and is indicated by arrow B. The path of travel of the harvester is indicated by arrow C.

As discussed, it is essential that the operator guide the machine so that the outer edge of the undercutting blade 16 travels in close alignment with the cut edge 20 of the strip of sod in the ground. To enable this to be carried out automatically, an automatic steering mechanism generally indicated at 22 is provided. The steering mechanism 22 includes a shoe 24 mounted on a support arm 26.

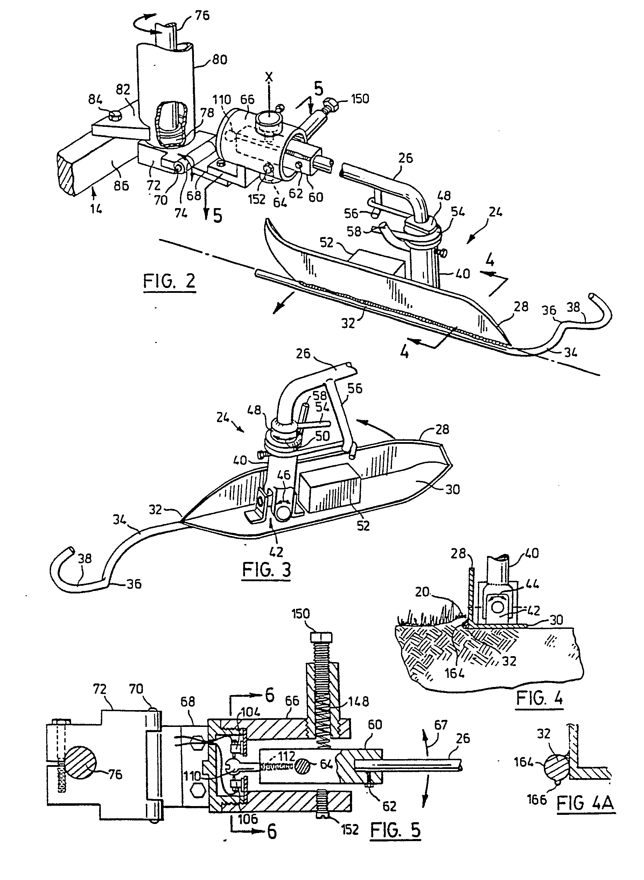

The shoe 24 is shown in more detail in Figs. 2 and 3 and includes a side plate 28 extending vertically along the inward edge of the shoe, and a horizontal bottom plate 30 which joins the side plate 28 at a right angle. A guide rod 32 is welded to the inward side of the side plate 28 and has a forward extension 34 located forwardly of the side plate 28. The forward extension 34 curves outwardly in a horizontal plane to a point indicated at 36, and then extends forwardly and upwardly as shown at 38, so that if the rod 32 encounters obstacles such as small stones, it may ride over these obstacles.

The shoe 24 is mounted on the arm 26 by a post 40 which is connected to the shoe by a universal joint 42. The universal joint 42 permits side to side rolling of the shoe in the direction of arrow 44 (Fig. 4) and front to back pitching of the shoe as indicated by arrow 46 (Fig. 3). The post 40 is also pivotally at 48 connected to the arm 26 to permit side to side yawing of the shoe as indicated by arrow 50. The rear of the shoe is biased downwardly by weight 52, and the rear of the shoe is also biased inwardly against the cut edge of the sod by a coil spring 54. Spring 54 has ends which for this purpose press against extensions 56 and 58 from the arm 26 and post 40 respectively. The bias of the rear of the shoe against the cut edge 20 of the sod reduces the tendency of the front of the shoe to turn against the cut sod edge (which it would otherwise do since the universal joint 42 is spaced outwardly from the cut edge 20) and thereby reduces the tendency of the shoe to turn against and climb over the edge of the sod.

The arm 26 extends rearwardly to an elongated square cross section holder 60 (Fig. 2), to which it is rigidly secured by bolt 62. The holder 60 is pivotally mounted by a vertical shaft 64 (Fig. 5) in a cylindrical hollow socket 66. Shaft 64 permits inward and outward pivotal movement of holder 60, arm 26 and shoe 24 as a unit in a horizontal plane about shaft 64, as indicated by arrow 67, Fig. 5.

The end of the socket 66 is fixed to a plate 68 which is connected, by a hinge 70 oriented in a horizontal plane, to another plate 72. The hinge 70 permits up and down movement of the socket 66, holder 60 and arm 26 in the direction of arrow 74 relative to plate 72.

The plate 72 is fixed to the bottom end of a vertical shaft 76 (Figs. 2, 5). The shaft 76 is supported, by bearings 78, in a cylindrical housing 80 fixed by a plate 82 (Fig. 2) and bolts 84 to the frame 86 of the sod cutter 14.

As indicated in Fig. 1, the vertical shaft 76 is connected by right angle gears (not shown) contained in housing 88, to a universal joint 90. From universal joint 90 a horizontal square tubing shaft 92 extends toward the tractor 4 and has telescopically fitted therein another horizontal square tubing shaft 94. Shaft 94 is connected to another universal joint 96 which is in turn connected by right angle gears in housing 98 to a vertical shaft 100. The vertical shaft 100 is connected to the steering shaft 102 which turns to steer the front wheels 6 of the tractor. The telescopic connection between shafts 92, 94 permits adjustment in length as the front end of the sod cutter 14 rises and falls relative to the tractor 4.

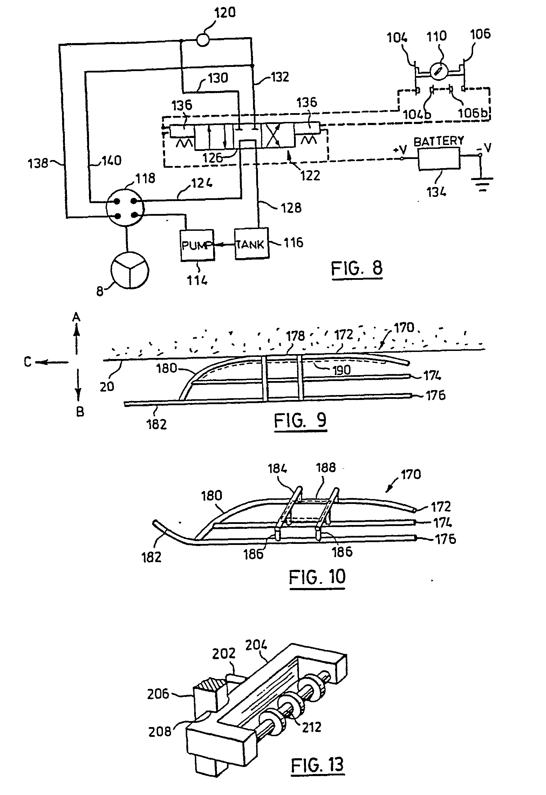

Sensing of the side to side movement of the shoe 24 is accomplished as follows. As shown in Figs. 5 and 6, the holder 60 contains two pairs of automobile points 104, 106, which are normally held open but which are moved to closed condition by a biasing spring, not shown. The movable element 104a, 106a of each pair of points has fixed thereto a conventional rubbing block 108 which bears against the rounded end 110 of a bolt 112 threaded into the end of the holder 60. When the arm 26 pivots to one side about the vertical shaft 64, for example clockwise as shown in Fig. 5, this moves bolt end 110 to the left (Fig. 6), opening the left hand points 104 further but permitting the right hand points 106 to close under the pressure of their biasing spring. The inner fixed contacts 104b, 106b of both pairs of points 104, 106, are grounded and when the right hand points 106 close, this sends a ground signal to a solenoid valve in the steering mechanism, as will now be explained with reference to the hydraulic circuit of Fig. 8.

As shown in Fig. 8, where dotted lines indicate electric connections and solid lines indicate hydraulic connections, the hydraulic steering circuit for the harvester includes a standard pump 114 which pumps hydraulic fluid from a tank 116 to a conventional power steering valve 118, such as that sold by Char-Lynn under its trade mark "Orbritrol". The power steering valve 118 is controlled by steering wheel 8 to direct hydraulic fluid from the pump 114 to a hydraulic steering motor 120 in the direction required by steering wheel 8, or back to the tank 116 if no steering is called for. The steering motor 120 is connected to steering shaft 102 to steer the tractor.

To effect automatic steering, a four way solenoid valve 122 is inserted into the circuit in parallel with the power steering valve 118. The conduit 124 from the steering unit 118, instead of returning directly to the tank 116 as would occur if valve 122 were not present, is now directed to the center section 126 of four way valve 122 and then via conduit 128 back to the tank 116. Conduits 130, 132 extend from the center section of the four way hydraulic valve 122 to each side of the hydraulic steering motor 120.

As also shown in Fig. 8, power from the tractor battery 134 is connected to solenoids 136 on each side of the solenoid valve 122. In addition the movable contacts 104a, 104b of each pair of points 104, 106 are connected to the other terminals of the solenoids 136.

In operation, and assuming that the automatic steering is not in use, fluid travels from pump 114, through automatic steering valve 118, through either of conduits 138, 140 to hydraulic motor 120 (depending on the steering direction), through the other of conduits 138, 140 back to steering valve 118, and through conduits 124, 128 back to the tank 116.

When automatic steering is required, the steering wheel 8 is left untouched, in a centered position, and the power from battery 134 is switched on to the solenoids 136 (by a switch not shown). Then, if the shoe 24 moves inwardly, i.e. clockwise as drawn in Fig. 5, this permits the right hand points 106 (Figs. 6 and 8) to close, actuating a solenoid 136 and shifting the spool of valve 122 to the left. Fluid then travels through conduits 124 and 132 to the right hand side of the hydraulic motor 120 and then through conduits 130, 128 back to the tank 116. This causes the hydraulic motor 120 to operate, turning the front wheels 6 to steer the tractor to the right, to follow the curve to the right in the cut sod edge which caused the shoe 24 to move inwardly.

When the front steering wheels 6 of the tractor 4 turn clockwise as seen from above (see also Fig. 7), this rotates the horizontal shafts 92, 94 which in turn rotates the vertical shaft 76 clockwise as seen from above, moving the socket 66 bodily clockwise as seen in Fig. 5. This restores the centered position of the ball end 110 with respect to the points 104, 106, forcing the closed points 106 to open again and cutting off steering power to the hydraulic motor 120. The front steering wheels 6 will then remain in the position to which they were last steered until a further steering signal operates the hydraulic motor 120 to cause the front steering wheels 6 to assume a new position. The system is therefore an on-off system.

To ensure that the shoe 24 will follow the direction of the cut sod edge 20, and also to ensure that movements of socket 66 are transmitted to holder 60, the arm 26 is biased inwardly by a coil spring 148 (Fig. 5) which bears against the holder 60 forwardly of the pivot shaft 64. The compression of the coil spring 148 is adjusted by a bolt 150. Another bolt 152 threaded into socket 66 serves as an adjustable stop on the other side of holder 60. A coil spring 154 (Fig. 1) connected between a rod 156 extending from the side of plate 72 and another projection 158 from the frame 86 serves to take up slack in the mechanical feedback system formed by the square shafts 92, 94 and the universals 90, 96.

To raise the shoe 24 and arm 26 when the sod harvester is traveling forwardly without cutting sod, a chain 160 is provided, connected between arm 26 and a hook 162 located on the housing 80 for shaft 76.

The shape of the shoe 24 will next be discussed. Since the cut edge 20 of a strip of sod can be very thin, for example 1/2 inch or less in height, and is usually of soft material, a severe tendency exists for the shoe to jump or ride over the cut edge 20, which would result in loss of steering control. Therefore as shown in Fig. 4, the shoe 24 is preferably formed with a penetrating edge or protrusion 164 (formed for example by rounded rod 32) on its inward surface which is of lesser height than the thickness of the sod to be cut, so that this edge can penetrate very slightly ino the cut edge of the sod below the top surface of the sod. This helps to hold the shoe down, resisting the tendency of the shoe to rise upwardly over the sod. If the sod is 1/2 inch (13 mm) thick, the rod 32 can typically be 3/8 inch to 1/2 inch ($9\frac{1}{2}$—13 mm) in diameter in which case the innermost edge of protrusion 164 will be 3/16 to 1/4 inch (5—$6\frac{1}{2}$ mm) below the top surface of the sod. In addition although the front end of the rod 32 is bent upwardly to ride over obstacles, the upward slope is displaced outwardly of the working edge of the shoe, i.e. outwardly of the portion of the edge which rides against the cut sod edge. This helps to prevent the shoe from rising over the cut sod edge.

Under some said conditions it may also be desirable also to provide a downwardly projecting edge on rod 32, as indicated at 166 in Fig. 4A, to help the shoe track accurately. However, the vertical extent of edge 166 will be limited, so as not to interfere unduly with side to side movement of the shoe as it follows the cut sod edge.

The ability of the shoe to move in all directions, i.e. to pitch, roll and yaw, also assists the shoe to follow the contours of the cut edge of the sod.

Reference is next made to Figs. 9 and 10, which show a modified shoe 170 according to the invention. As shown, the shoe 170 is formed from a set of three longitudinally extending rods 172, 174, and 176. Rod 172, which slides past the cut edge of the sod, has a center portion 178 which is slightly curved, i.e. is concave looking in an inward direction, to follow better the contour of the cut edge 20. The forward portion 180 of the inward rod 172 curves forwardly and outwardly, in a horizontal plane, and is joined to the outward rod 176. The forward portion 182 of the outward rod 176 slopes upwardly to ride over obstacles. A bridge 184 extends across all three rods 172, 174, 176 and is supported thereon by short vertically extending rods 186. The bridge 184 carries a plate 188 on which is mounted the universal joint 42 (not shown in Figs. 9, 10) for the support arm 26. The advantage of the shoe shown in Figs. 9 and 10 is that it is less likely to pick up and become plugged with loose grass, sticks and other debris than is a shoe having solid plates. However in very soft or muddy sod it may be necessary to add a vertical side plate 190 shown in dotted lines in Fig. 9, similar to side plate 28, along the outward edge of inward rod 172 to prevent this rod from penetrating too deeply into the cut edge 20 of the sod.

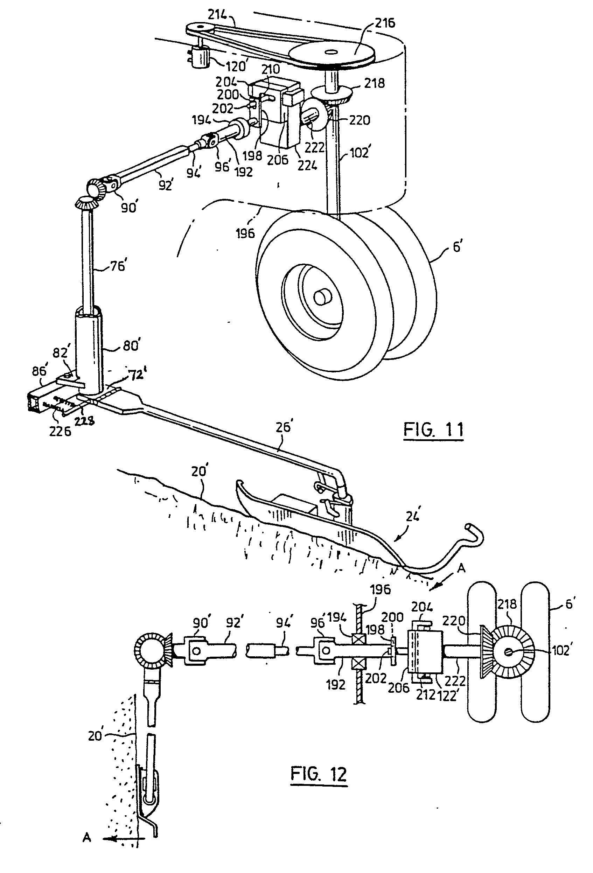

Reference is next made to Figs. 11 to 13, which show a modified automatic steering mechanism according to the invention, and in which primed reference numerals indicate parts corresponding to those of Figs. 1 to 10. As shown in Fig. 11, the arm 26, holder 60 and socket 66 have all been consolidated into a single rigid arm 26', so that side to side movement of the shoe 24' is translated directly into rotation of vertical shaft 76'. The vertical shaft 76', as before, transmits its rotary motion through universal 90', shafts 92', 94', and universal 96'.

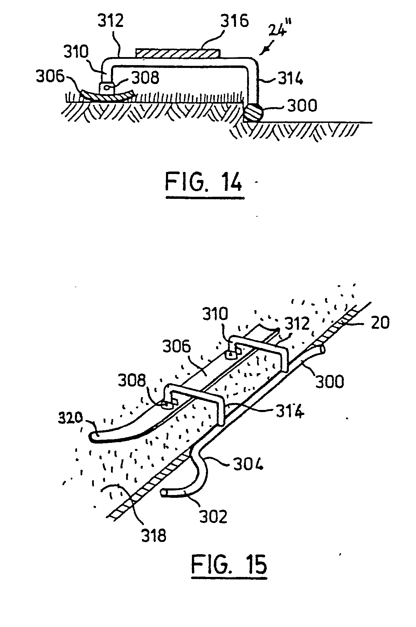

The universal joint 96' is connected to a shaft 192 which, as shown in Figs. 11 and 12, is journalled by bearings 194 in a side plate 196 of the tractor 4. Fixed to the other end of shaft 192 is a vertical lever arm 198. The lever arm 198 has a slot 200 in its upper portion. A pin 202 extends through the slot 200 and is fixed to a U-shaped shuttle bracket 204 (Fig. 13). The shuttle bracket 204 is guided for movement forwardly and rearwardly by a guide plate 206 mounted on the four way hydraulic valve 122'. The plate 206 contains a guide groove 208 in its inner surface to retain the shuttle bracket 204 between it and the body of valve 122', and plate 206 also has a slot 210 through which pin 202 projects.

The hydraulic valve 122' is the same as valve 122 of Fig. 8 except that it is now mechanically actuated (by shuttle bracket 204) rather than being electrically actuated. Valve 122' therefore lacks the solenoids 136.

In operation, when the shoe 24' moves from side to side, its movements are transmitted by the shaft 192 to lever arm 198, which moves pin 202 and hence shuttle bracket 204 forwardly and rearwardly. The spool of valve 122' is indicated diagrammatically at 212 in Fig. 13, and as shown, the ends of shuttle bracket 204 engage the ends of spool 212 and move it back and forth to alter the condition of valve 122'. The valve 122' controls the operation of hydraulic steering motor 120' as before.

As shown in Fig. 11, the hydraulic steering motor 120' drives a chain 214 which drives a large steering sprocket 216. The steering sprocket 216 is connected to vertical steering shaft 102' which steers the front wheels 6' of the tractor.

Feedback to shut off the steering motor 120' after sufficient steering has been achieved is provided as follows. A bevel gear 218 is mounted on steering shaft 102' and drives another bevel gear 220 to which is connected a shaft 222. The shaft 222 is mounted in bearings, not shown, and supports at its end a mounting block 224 on which is fixed the four way valve 122'.

In operation, if the shoe 24' moves for example inwardly, this rotates vertical shaft 76' clockwise as shown in Figs. 11 and 12, rotating shafts 92', 94' and 192 counterclockwise. The top of lever arm 198 moves to the left as shown in Fig. 11. This moves shuttle bracket 204 to the left as shown in Fig. 11 (and to the right as shown in Fig. 13). This moves the valve spool 212 off its center position to operate the hydraulic motor 120'. The hydraulic motor 120' then turns steering sprocket 214 to steer tractor wheels 6' clockwise as seen from above, to follow the cut sod edge 20'.

When wheels 6' and steering shaft 102' turn clockwise, bevel gear 218 also turns clockwise, rotating shaft 222 counterclockwise. This turns the mounting block 224 counterclockwise, carrying the body of four way valve 122' to the left as shown in Fig. 11. The movement of the body of valve 122' in the same direction as the movement of shuttle bracket 204 counteracts the movement of the shuttle bracket and returns the valve 122' to its centered or neutral condition.

It is preferred in the Figs. 11 to 13 apparatus to use a variable flow valve 122', so that there is a slow flow of hydraulic fluid when the spool is slightly off its center position and a faster flow as it moves farther from its center position. This can be accomplished by tapering the corners of the standard grooves (not shown) in the valve body or by chamfering the edges of the standard discs on the valve spool 212. The automatic steering mechanism is then no longer simply an on-off mechanism but will provide smooth minor corrections when needed and more rapid major corrections if larger steering movements are required. It is found that the Figs. 11 to 13 steering system is more sensitive and less likely to hunt than the system described previously.

The hydraulic circuit for the automatic steering mechanism of Figs. 11 to 13 is exactly the same as that shown in Fig. 8, but the electric circuit is eliminated since the signal used to operate the valve 122 is now mechanical instead of electrical.

In addition, since the bias spring 148 of Fig. 5 has been eliminated, coil springs 226 (Fig. 11) are provided, connected between a post 228 extending inwardly from plate 72' and the frame 86', to bias the arm 26' and shoe 24' inwardly against the cut edge 6' of the sod.

It will be appreciated that in the Fig. 1 arrangement, sensing of the position of arm 26 was provided by the points 104, 106 and feedback was provided by a mechanical connection to steer the plate 72 to which the arm 26 was connected. In the Figs. 11 to 13 embodiment, sensing is provided by a system including the shafts 92', 94' and the sensing system operates a mechanical shuttle to control the steering valve 122'. Feedback is provided by a connection from the steering shaft which moves the valve body itself relative to the steering shuttle.

Althrough two specific systems have been shown for steering the arm 26 or 26' and for sensing the movement of the shoe, and each has substantial advantages, it will be appreciated that other systems can also be used. For example a "Selsyn" (trade mark) sensing and feedback system may be used if desired.

In addition, although a hydraulic motor has been shown for providing steering power for the vehicle, other hydraulic power means may be used, e.g. a hydraulic piston used with rack and pinion steering. The movement and direction of movement of the piston will then be controlled just as the operation and direction of the hydraulic motor are controlled, by valve means such as that described.

Although the shoe 24, 24' has been described as having its front ramp or upwardly sloping portion 38 displaced outwardly of the sod edge, nevertheless if the cut edge 20 is sharp, clean and well defined, and reasonably high and firm, then the ramp 38 need not in that case be displaced outwardly from the edge. However the outward displacement is preferred.

The shoe 24, 24' has also been described as sliding on the earth with its edge against the cut sod edge. However the shoe can also slide over the grass with the edge of the shoe dipping down over the sod edge, as illustrated at 24" in Figs. 14 and 15. In Figs. 14 and 15 the shoe 24" has a rod 300 which is the same as rod 32 of Figs. 2 and 3. Rod 300 has an upwardly sloping ramp 302 which, like ramp 38 of rod 32, is displaced outwardly from sod edge 20. The rod portion 304 connecting ramp 302 and the remainder of rod 300 is horizontal.

The shoe 24" also includes a runner 306 which is concave as viewed from above. Runner 306 is pivotally connected at 308 to short vertical posts 310. Posts 310 are fixed to cross pieces 312, which are fixed to further posts 314 welded to rod 300. The cross pieces 312 carry a plate 316 for the shoe mounting mechanism (not shown).

In use, rod 300 slides along the cut sod edge as before, and runner 306 slides over the grass surface 318. Runner 306 has a front ramp 320 so that it will not act like a plough. If variations in the height of sod edge 20 occur, these are accommodated by rolling of the runner 306 from side to side, as permitted by pivots 308.

Although the automatic steering mechanism and shoe shown have been described for use with a harvester pulled by a tractor, they may also be used in a self propelled sod harvesting vehicle or other type of sod harvester pulled or pushed by a propelling vehicle. In addition they may also be used with a sod laying vehicle, which lays a strip of sod on the ground. In that case, once the first strip has been laid, the shoe will follow the free edge of that strip and guide the machine for laying further strips.

## Claims

1. A shoe for sod harvesting apparatus having an automatic steering mechanism for guiding said apparatus along a path of travel parallel to a cut edge of sod in the ground, said automatic steering mechanism including a support arm having a rear end mounted on said apparatus and a forward end; said shoe being adapted to be mounted on the forward end of said support arm and being adapted to slide along the ground against the cut edge of sod and to follow the edge for guiding the apparatus, and comprising:

(a) a trailing end,

(b) an elongated edge rod of substantially circular cross-section adapted to slide along and protrude into said cut edge,

(c) a front rod joined to the edge rod and extending forwardly and outwardly from the edge rod, away from said cut edge to a location spaced outwardly of the edge rod,

(d) front ramp means extending forwardly from said location so that the shoe will rise over obstacles in its path of travel, said front ramp means being spaced outwardly from said cut edge, and

(e) joint means mounted on said shoe at a location between the front ramp means and the trailing end so that the shoe extends substantially both forwardly and rearwardly of the joint means, said joint means being adapted to connect the shoe to the forward end of said support arm and said joint means permitting pitching and yawing movement of the shoe relative to the support arm.

2. A shoe according to claim 1, and additionally incorporating at least one further rod spaced laterally from the elongated edge rod and adapted to slide over the ground and act as a support runner.

3. Sod harvesting apparatus having steering wheels for steering said apparatus, a steering mechanism for steering said wheels, hydraulic power means for driving the steering mechanism, a hydraulic steering circuit connected to the hydraulic power means for operating the hydraulic power means, an automatic steering mechanism for guiding said apparatus along a path of travel parallel to a cut edge of sod in the ground, said automatic steering mechanism including

(a) a support arm having a rear end mounted on the apparatus,

(b) a shoe according to claim 1 or claim 2 mounted on the forward end of the support arm through the joint means referred to in (e) of claim 1,

(c) spring means acting on the rear end of the support arm to bias the support arm towards the cut edge of sod,

(d) sensing and actuating means connected to the support arm for sensing side to side movement of said arm as the shoe follows said cut edge and for producing an actuating signal in response to said side to side movement,

(e) valve means in said hydraulic steering circuit for controlling flow to the hydraulic power means,

(f) said valve means being connected to said sensing means and actuating means and being responsive to said actuating signal for operating the power means to steer the steering wheels for the apparatus to follow the path of the shoe,

(g) and feedback means connected to said wheels and coupled to one of said sensing and actuating means and said valve means and responsive to the steering of said wheels in the direction caused by the steering signal to change the condition of said one of said sensing and actuating means and said valve means in a direction to reduce the effect of said actuating signal on said valve means.

4. Apparatus according to claim 3 wherein said sensing and actuating means comprises a holder, means supporting the support arm for side to side pivotal movement of said arm in said holder, two pairs of automobile ignition points each having an open and a closed condition, one set of pins on each side of said arm in said holder and positioned for movement of said arm in one direction in said holder to change the condition of one set of points and movement of said arm in the other direction in said holder to change the condition of said other set of points, a pair of solenoids connected to said valve means for operating said valve means, said points being connected to the solenoids for operation thereof, said feedback means comprising a mechanical connection between said wheels and said holder to steer said holder in the direction of turn of the wheels.

5. Apparatus according to claim 3 wherein said sensing and actuating means includes an actuator connected to said valve means for operating said valve means, means mounting said valve means for movement thereof, and said sensing and actuating means and said feedback means include means coupled between the support arm and one of said actuator and said valve means for side to side movement of said arm to move said one of said actuator and said valve means, and means coupled between the steering wheels and the other of said actuator and said valve means for steering movement of said wheels to move the other of said actuator and said valve means.

6. Apparatus according to claim 3 wherein said sensing and actuating means comprises shaft means connected to the support arm and rotatable in response to side to side movement of said arm, a shuttle mounted on said valve means for operating said valve means, and means connected between said shaft means and said shuttle for moving said shuttle in response to rotary movement of said shaft means, and said feedback means comprises a shaft, means connecting said shaft to said wheels for rotary movement of said shaft with said steering wheels, and means connecting said valve means with said shaft for movement of said valve means with said shaft, so that as said wheels are steered in response to an actuating signal, said shaft moves said valve means relative to said shuttle in a direction to reduce the effect of said actuating signal.

7. A machine according to any one of claims 3 to 6 and including an upright post having a shaft rotatable therein, means connecting said support arm to said shaft in the upright post for side to side movement of said arm to rotate said shaft, and means connecting said shaft in the upright post to said sensing and actuating means.

## Revendications

1. Un sabot pour appareil récolteur de gazon ayant un mécanisme de pilotage automatique pour guider ledit appareil le long d'une trajectoire de parcours parallèle à un bord coupé de gazon dans le sol, ledit mécanisme de pilotage automatique comprenant un bras-support ayant une extrémité arrière montée sur ledit appareil et une extrémité avant; ledit sabot étant adapté pour être monté sur l'extrémité avant dudit bras-support et étant adapté pour glisser le long du sol contre le bord coupé de gazon et pour suivre le bord pour guider l'appareil, et comprenant:

(a) une extrémité traînée,

(b) une tige de bord allongée de section transversale sensiblement circulaire, adaptée pour glisser le long dudit bord coupé et faire saillie dans celui-ci,

(c) une tige avant jointe à la tige de bord et s'étendant en avant et vers l'extérieur depuis la tige de bord en s'écartant dudit bord coupé jusqu'à un emplacement espacé vers l'extérieur de la tige de bord,

(d) des moyens formant rampe avant s'étendant en avant depuis ledit emplacement, de sorte que le sabot s'élèvera par-dessus des obstacles dans sa trajectoire de parcours, lesdits moyens formant rampe avant étant espacés vers l'extérieur à partir dudit bord coupé, et

(e) des moyens formant joint montés sur ledit sabot en un emplacement entre les moyens formant rampe avant et l'extrémité traînée, de sorte que le sabot s'étend sensiblement à la fois en avant et en arrière des moyens formant joint, lesdits moyens formant joint étant adaptés pour relier le sabot à l'extrémité avant dudit bras-support et lesdits moyens formant joint permettant un mouvement de tangage et de lacet du sabot relativement au bras-support.

2. Un sabot selon la revendication 1 et comportant additionnellement au moins une autre tige latéralement espacée de la tige de bord allongée et adaptée pour glisser sur le sol et agir comme patin-support.

3. Appareil récolteur de gazon ayant des roues directrices pour diriger ledit appareil, un mécanisme de pilotage pour diriger lesdites roues, des moyens à puissance hydraulique pour entraîner ledit mécanisme de pilotage, un circuit de pilotage hydraulique relié aux moyens à puissance hydraulique pour actionner les moyens à puissance hydraulique, un mécanisme de direction automatique pour guider ledit appareil le long d'une trajectoire de parcours parallèle à un bord coupé de gazon dans le sol, ledit mécanisme de direction automatique comprenant:

(a) un bras-support ayant une extrémité arrière montée sur l'appareil,

(b) un sabot selon la revendication 1 ou la revendication 2 monté sur l'extrémité avant du bras-support par l'intermédiaire des moyens formant joint mentionnés dans (e) de la revendication 1,

(c) des moyens à ressort agissant sur l'extrémité arrière du bras-support pour solliciter le bras-support vers le bord coupé de gazon,

(d) des moyens détecteurs et actionneurs reliés au bras-support pour déceler un mouvement d'un côté à l'autre dudit bras au fur et à mesure que le sabot suit ledit bord coupé et pour produire un signal actionneur en réponse audit mouvement d'un côté à l'autre,

(e) des moyens formant valve dans ledit circuit de pilotage hydraulique pour commander l'écoulement vers les moyens à puissance hydraulique,

(f) lesdits moyens formant valve étant reliés auxdits moyens détecteurs et auxdits moyens actionneurs et étant susceptibles de réagir audit signal actionneur pour actionner les moyens à puissance pour piloter les roues directrices pour que l'appareil suive la trajectoire du sabot,

(g) et des moyens de rétroaction reliés auxdites roues et accouplés à l'un desdits moyens détecteurs et actionneurs et auxdits moyens formant valve et susceptibles de réagir au pilotage desdites roues dans le sens causé par le signal de pilotage pour changer l'état dudit moyen parmi lesdits moyens détecteurs et actionneurs et lesdits moyens formant valve dans un sens permettant de réduire l'effet dudit signal actionneur sur lesdits moyens formant valve.

4. Appareil selon la revendication 3, dans lequel ledit moyen détecteur et actionneur comprend un support, des moyens supportant le bras-support pour le mouvement pivotant d'un côté à l'autre dudit bras dans ledit support, deux paires de contacts d'allumage automobile ayant chacun un état ouvert et un état fermé, un groupe de chevilles de chaque côté dudit bras dans ledit support et positionnées pour le mouvement dudit bras dans un sens dans ledit support pour changer l'état d'un groupe de contacts et pour le mouvement dudit bras dans l'autre sens dans ledit support pour changer l'état dudit autre groupe de contacts, une paire de solénoïdes connectés audit moyen formant valve pour actionner ledit moyen formant valve, lesdits contacts étant connectés aux solénoïdes pour l'actionnement de ceux-ci, lesdits moyens à rétroaction comprenant une liaison mécanique entre lesdites roues et ledit support pour piloter ledit support dans le sens de rotation des roues.

5. Appareil selon la revendication 3, dans lequel ledit moyen détecteur et actionneur comprend un actionneur relié audit moyen formant valve pour actionner ledit moyen formant valve, des moyens supportant ledit moyen formant valve pour le mouvement de celui-ci, et lesdits moyens détecteurs et actionneurs et ledit moyen à rétroaction comprennent des moyens montés entre le bras-support et l'un dudit actionneur et dudit moyen formant valve pour le mouvement d'un côté à l'autre dudit bras pour mouvoir ledit moyen parmi ledit actionneur et ledit moyen formant valve, et des moyens montés entre les roues directrices et l'autre moyen parmi ledit actionneur et ledit moyen formant valve pour piloter le mouvement desdites roues pour déplacer l'autre moyen parmi ledit actionneur et ledit moyen formant valve.

6. Appareil selon la revendication 3, dans lequel ledit moyen détecteur et actionneur comprend des moyens formant arbre reliés au bras-support et susceptibles de tourner en réponse à un mouvement d'un côté à l'autre dudit bras, un va-et-vient monté sur ledit moyen formant valve pour actionner ledit moyen formant valve, et des moyens attachés entre ledit moyen formant arbre et ledit va-et-vient pour mouvoir ledit va-et-vient en réponse à un mouvement rotatif desdits moyens formant arbre, et ledit moyen à rétroaction comprend un arbre, des moyens reliant ledit arbre auxdites roues pour le mouvement rotatif dudit arbre avec lesdites roues directrices, et des moyens reliant ledit moyen formant valve audit arbre pour le mouvement dudit moyen formant valve avec ledit arbre, de sorte que, lorsque lesdites roues sont pilotées en réponse à un signal actionneur, ledit arbre déplace ledit moyen formant valve relativement audit va-et-vient dans un sens permettant de réduire l'effet dudit signal actionneur.

7. Une machine selon l'une quelconque des revendications 3 à 6 et comprenant un montant vertical ayant un arbre susceptible de tourner dans celui-ci, des moyens reliant ledit bras-support audit arbre dans le montant vertical pour le mouvement d'un côté à l'autre dudit bras pour faire tourner ledit arbre, et des moyens reliant ledit arbre dans le montant vertical auxdits moyens détecteurs et actionneurs.

## Patentansprüche

1. Schuh für eine Vorrichtung zum Ernten von Grassoden, der einen automatischen Steuermechanismus aufweist, um die Vorrichtung längs einer Bewegungsbahn zu führen, die zu einem beschnittenen Rand der Sode im Boden parallel ist, wobei der automatische Steuermechanismus einen Tragarm umfaßt, der ein an der Vorrichtung gelagertes hinteres Ende und ein vorderes Ende aufweist, wobei der Schuh am vorderen Ende des Tragarms lagerbar ist und in Anlage an dem beschnittenen Rand der Sode auf dem Boden gleiten und dem Rand zum Führen der Vorrichtung folgen kann, und folgende Merkmale aufweist:

a) ein hinteres Ende,

b) eine längliche Kantenstange mit im wesentlichen kreisförmigem Querschnitt, die an dem beschnittenen Rand entlanggleiten und in diesen eindringen kann,

c) eine Frontstange, die mit der Kantenstange verbunden ist und sich vor dieser von dem beschnittenen Rand weg nach außen zu einem außerhalb der Kantenstange befindlichen Punkt erstreckt,

d) vordere Rampenmittel, die sich von dem Punkt nach vorne erstrecken, so daß der Schuh über Hindernisse in seiner Bewegungsbahn angehoben wird, wobei sich die vorderen Rampenmittel im Abstand außerhalb des beschnittenen Randes befinden, und

e) Verbindungsmittel, die an dem Schuh an einer Stelle zwischen den vorderen Rampenmitteln und dem hinteren Ende gelagert sind, so daß der Schuh im wesentlichen nach vorne und nach hinten über die Verbindungsmittel hinausragt, wobei der Schuh über die Verbindungsmittel mit dem vorderen Ende des Tragarms verbindbar ist und wobei die Verbindungsmittel eine Bewegung des Schuhs relativ zum Tragarm um die Hochachse und die Querachse ermöglichen.

2. Schuh nach Anspruch 1, mit mindestens einer zusätzlichen Stange, die im seitlichen Abstand von der länglichen Kantenstange angeordnet ist und auf dem Boden gleiten und als Stützläufer dienen kann.

3. Vorrichtung zum Ernten von Grassoden mit lenkbaren Rädern zum Steuern der Vorrichtung, einem Steuermechanismus zum Steuern der Räder, einer hydraulischen Antriebseinrichtung zum Antreiben des Steuermechanismus, einem mit der hydraulischen Antriebseinrichtung verbundenen hydraulischen Steuerkreis zum Betätigen der hydraulischen Antriebseinrichtung, einem automatischen Steuermechanismus zum Führen der Vorrichtung längs einer Bewegungsbahn, die zu einem beschnittenen Rand der Sode im Boden parallel ist, wobei der automatische Steuermechanismus umfaßt:

a) einen Tragarm, der ein an der Vorrichtung gelagertes hinteres Ende aufweist,

b) einen Schuh gemäß Anspruch 1 oder 2, der am vorderen Ende des Tragarms durch die Verbindungseinrichtung gemäß Merkmal (e) von Anspruch 1 gelagert ist,

c) Federmittel, die auf das hintere Ende des Tragarms einwirken, um den Tragarm gegen den beschnittenen Rand der Grassode anzudrücken,

d) Fühl- und Betätigungsmittel, die mit dem Tragarm verbunden sind, um dessen Seitenbewegung zu ermitteln, wenn der Schuh dem Schnittrand folgt, und um ein der Seitenbewegung entsprechendes Betätigungssignal zu erzeugen,

e) Ventilmittel, die in dem hydraulischen Steuerkreis angeordnet sind, um den Zufluß zu der hydraulischen Antriebseinrichtung zu steuern,

f) wobei die Ventilmittel mit den Fühlmitteln und der Betätigungseinrichtung verbunden sind und auf das Betätigungssignal ansprechen, um die Antriebseinrichtung zum Steuern der lenkbaren Räder der Vorrichtung zu betätigen, damit diese der Bahn des Schuhs folgen,

g) eine Rückkoppelungseinrichtung, die mit den Rädern verbunden und mit einem der Fühl- und Betätigungsmittel und den Ventilmitteln gekuppelt ist und auf das Steuern der Rädern in der durch das Steuersignal bewirkten Richtung anspricht, um den Zustand dieser einen Fühl- und Betätigungsmittel und der Ventilmittel in eine Richtung zu verändern, um den Einfluß des Betätigungssignals auf die Ventilmittel zu verringern.

4. Vorrichtung nach Anspruch 3, wobei die Fühl- und Betätigungsmittel bestehend aus einem Halter, Mitteln, die den Tragarm zu einer seitlichen Schwenkbewegung in dem Halter abstützen, zwei Paare von Kraftfahrzeug-Zündpunkten, die jeweils einen offenen und einen geschlossenen Zustand aufweisen, eine Gruppe von Stiften auf jeder Seite des Arms im Halter, die so angeordnet sind, daß sie bei einer Bewegung des Arms in einer Richtung im Halter den Zustand der einen Gruppe der Zündpunkte verändern und bei einer Bewegung des Arms in der anderen Richtung im Halter den Zustand der anderen Gruppe von Zündpunkten verändern, zwei Elektromagneten, die mit den Ventilmitteln verbunden sind, um diese zu betätigen, wobei die Zündpunkte mit den Elektromagneten zur Betätigung derselben verbunden sind, und daß die Rückkoppelungseinrichtung aus einer mechanischen Verbindung zwischen den Rädern und dem Halter besteht, um den Halter in der Schwenkrichtung der Räder zu steuern.

5. Vorrichtung nach Anspruch 3, wobei die Fühl- und Betätigungsmittel eine Betätigungseinrichtung umfassen, die mit den Ventilmitteln verbunden ist, um diese zu steuern, Lagermittel für die Ventilmittel zum Steuern derselben, und wobei die Fühl- und Betätigungsmittel und die Rückkoppelungseinrichtung Mittel umfassen, die mit dem Tragarm und einem der Betätigungs- und Ventilmittel zu einer seitlichen Bewegung des Arms gekuppelt sind, um das eine der Betätigungs- und Ventilmittel zu bewegen, und Mittel umfassen, die mit den lenkbaren Rädern und den anderen Betätigungs- und Ventilmitteln gekuppelt sind, um die Bewegung der Räder zu steuern zum Bewegen der anderen Betätigungs- und Ventilmittel.

6. Vorrichtung nach Anspruch 3, wobei die Fühl- und Betätigungsmittel aus einer mit dem Tragarm verbundenen und entsprechend der seitlichen Bewegung des Arms verdrehbaren Welle einem auf den Ventilmitteln gelagerten Schieber zum Betätigen der Ventilmittel und Mitteln bestehen, die mit der Welle und dem Ventilschieber verbunden sind, um den Ventilschieber entsprechend der Drehbewegung der Welle zu bewegen, und daß die Rückkoppelungseinrichtung aus einer Welle, Verbindungsmitteln, welche die Welle mit den Rädern zu einer Drehbewegung der Welle mit den lenkbaren Rädern verbinden, und Verbindungsmitteln besteht, welche die Ventilmittel mit der Welle zu einer Bewegung der Ventilmittel mit der Welle verbinden, so daß bei einer Steuerung der Räder entsprechend einem Betätigungssignal die Welle die Ventilmittel relativ zum Ventilschieber in einer Richtung bewegt, um die Wirkung des Betätigungssignals zu verringern.

7. Maschine nach einem der Ansprüche 3 bis 6 und mit einer aufrechten Säule mit einer in dieser drehbar gelagerten Welle, Verbindungsmitteln, die den Tragarm mit der in der aufrechten Säule befindlichen Welle verbinden, um bei einer seitlichen Bewegung des Arms die Welle zu verdrehen, und Verbindungsmittel, welche die in der aufrechten Säule befindliche Welle mit den Fühl- und Betätigungsmitteln verbinden.

FIG. 1

0 023 142

FIG. 2

FIG. 3

FIG. 4

FIG. 4A

FIG. 5

FIG. 6

FIG. 7

3

FIG. 8

FIG. 9

FIG. 10

FIG. 13

**0 023 142**

FIG. 11

FIG. 12

5

FIG. 14

FIG. 15